# EUROPEAN PATENT SPECIFICATION

(11) **EP 2 094 759 B1**
(45) Date of publication and mention of the grant of the patent: **18.04.2012**
(21) Application number: 07864526.4
(22) Date of filing: 16.11.2007
(51) Int. Cl.: C08G 59/50

(54) **EPOXY RESINS COMPRISING A CYCLOALIPHATIC DIAMINE CURING AGENT**
EPOXIDHARZE MIT HÄRTUNGSMITTEL MIT CYCLOALPHATISCHEM DIAMIN
RÉSINES ÉPOXYDES COMPORTANT UN AGENT DE CUISSON DIAMINE ALIPHATIQUE

(30) Priority: 20.11.2006 US 860128 P; 11.09.2007 US 993288 P; 13.11.2007 US 939420
(43) Date of publication of application: 02.09.2009
(73) Proprietor: Dow Global Technologies LLC, Midland, MI 48674 (US)
(72) Inventor: ARGYROPOULOS, John N., Midland, MI 48674 (US); BHATTACHARJEE, Debkumar, Lake Jackson, TX 77566 (US); TURAKHIA, Rajesh H., Lake Jackson, TX 77566 (US)
(74) Representative: Hayes, Adrian Chetwynd
(86) International application number: PCT/US2007/084954
(87) International publication number: WO 2008/064115

(56) References cited:
- EP-A- 0 535 794

## Description

### CROSS-REFERENCE TO RELATED APPLICATIONS

This application claims priority to U.S. Provisional Application Serial Nos. 60/993,288, filed on September 11, 2007, and 60/860,128, filed on November 20, 2006, each of which is hereby incorporated by reference.

### BACKGROUND OF INVENTION

### Field of the Invention

Embodiments disclosed herein relate generally to hardener compositions. Specific embodiments disclosed herein relate to hardener compositions for epoxy resin systems.

### Background

One area of continued research in chemical development is to formulate a curing agent which is compatible with conventional epoxy resins at low curing temperatures, and which is sufficiently reactive with epoxy resins such that the system will cure over a wide range of temperatures. Especially desired are curing agents which will cure at low temperatures within a 24 hour period in the absence of external accelerators.

Typical amine curing agents, whether aliphatic, aromatic, or adducts with epoxy resins, which terminate with at least one primary amine group, often produce the undesired side effect of "blooming" or "hazing" in the cured product. Blooming occurs when the amount of condensate causes water-soluble compounds to migrate to the surface of the product. Blooming or hazing is more likely to be encountered when the curing agent is stored for a lengthy period of time, and applied in low temperature or high humidity environments.

Blooming and hazing may be ameliorated to some extent by reacting out many of the primary amine hydrogens. However, the reactivity of the resulting curing agent may be impaired as secondary amines are less reactive than the primary amines. As a result, accelerators are often used to obtain adequate cure times, especially at low curing temperatures. Furthermore, many of the amine curing agents adducts, whose primary amine groups were converted to secondary amine groups, are poorly compatible with epoxy resins.

Typical cycloaliphatic diamine curing agents include isophorone diamine (IPDA), 1,2-diaminocyclohexane, and bis-p-aminocyclohexylmethane. These cycloaliphatic diamines may result in a resin having good coating properties, but have the disadvantage of slow cure rates with epoxy resins.

Accordingly, there exists a need for hardener compositions compatible with epoxy having an improved cure speed and an improved ability to cure at lower temperatures. Preferably, the improved cure speed does not compromise critical coating properties, including color, haze, chemical resistance, adhesion, and hydrolytic resistance, among others.

### SUMMARY OF INVENTION

In one aspect, embodiments disclosed herein relate to a hardener composition for epoxy resins, the hardener composition including: (a) 1,3-bis(aminomethyl)cyclohexane; and (b) 1,4-bis(aminomethyl)cyclohexane. The hardener composition may include cis and trans isomers of both component (a) and component (b).

In another aspect, embodiments disclosed herein relate to a prepolymer hardener composition for epoxy resins, the prepolymer hardener composition including the reaction product of an epoxy with a hardener composition including (a) 1,3-bis(aminomethyl)cyclohexane; and (b) 1,4-bis(aminomethyl)cyclohexane.

In another aspect, embodiments disclosed herein relate to a curable formulation including the hardener composition or prepolymer composition as previously described and an epoxy resin.

In another aspect, embodiments disclosed herein relate to a method for adhering two substrates, the method including: applying an epoxy resin and the hardener composition or prepolymer hardener composition as previously described to one or both of the substrates; and bringing the substrates into a contacting relationship.

Other aspects and advantages of embodiments disclosed herein will be apparent from the following description and the appended claims.

### BRIEF DESCRIPTION OF DRAWINGS

Figure 1 shows a comparison of reactivity of two prior art formulations against a composition in accordance with a disclosed embodiment.

Figure 2 shows a comparison of fracture toughness of two prior art formulations against a composition in accordance with a disclosed embodiment.

Figure 3 shows a comparison of fracture toughness of epoxy resin compositions according to embodiments disclosed herein as compared to an epoxy resin cured with IPDA.

### DETAILED DESCRIPTION

In one aspect, embodiments disclosed herein relate to epoxy hardeners having an improved cure speed at lower temperatures. In other aspects, embodiments disclosed herein relate to epoxy hardener compositions including a mixture of amines and/or amine derivatives. In yet other aspects, embodiments disclosed herein relate to epoxy prepolymer hardener compositions formed by reacting an amine with an epoxy.

The mixture of amines or a hardener composition formed from the mixture of amines may be combined with an epoxy resin to form a curable composition. The amine curing agent mixtures, hardener composition, epoxy resins, and curable compositions disclosed herein are described in more detail below.

***Amine Curing Agent Mixture***

Embodiments disclosed herein relate to epoxy hardener compositions including a mixture of 1,3-bis(aminomethyl)cyclohexane, 1,4-bis(aminomethyl)cyclohexane, their isomers, and derivatives thereof. Other embodiments disclosed herein relate to a prepolymer hardener composition may be obtained by reacting 1,3-bis(aminomethyl)cyclohexane, 1,4-bis(aminomethyl)cyclohexane, their isomers, and combinations thereof, with an epoxy compound or a resin. For example, 1,3- and 1,4-bis(aminomethyl)cyclohexane may be reacted with an epoxy such as D.E.R. 331 to form a prepolymer hardener or also termed as amine adduct.

It has been found that mixtures of 1-3, and 1-4-bis(aminomethyl)cyclohexane may provide very fast curing time as an epoxy curing agent without sacrificing color/haze properties and chemical resistance. In other embodiments, the amine mixture may include norbornanediamine (2,5 (2,6)-bis(aminomethyl)bicycle(2,2,1)heptane) (NBDA).

In some embodiments, a mixture of 1,3- and 1,4-bis(aminomethyl)cyclohexane may include cis and trans isomers of the 1,3- and 1,4-bis(aminomethyl)cyclohexanes. For example, in some embodiments, the amine curing agent mixture disclosed herein may include cis and trans isomers of 1,3-bis(aminomethyl)cyclohexane. Other embodiments may include cis and trans isomers of 1,4-bis(aminomethyl)cyclohexane. And yet other embodiments may include cis and trans isomers of both 1,3- and 1,4-bis(aminomethyl)cyclohexane.

It has been surprisingly found that the unique structure and presence of four isomers, 1,3- and 1,4- positional isomers with cis and trans geometric isomers from each may result in improved epoxy resin properties while maintaining high reactivity arising from a primary amine.

The amine curing agent mixtures disclosed herein may include 1,3- and 1,4-bis(aminomethyl)cyclohexane, where the mixture includes at least some 1,4-bis(aminomethyl)cyclohexane. In other embodiments, the amine curing agent mixture may include at least 1 weight percent 1,4-bis(aminomethyl)cyclohexane, based on a total weight of the 1,3- and 1,4-bis(aminomethyl)cyclohexane. In various other embodiments, the amine curing agent mixture may include up to 5, 10, 15, 20, 30, 40, 50, 60, 70, 80, .90, and up to 99 weight percent 1,4-bis(aminomethyl)cyclohexane based on a total weight of the 1,3- and 1,4-bis(aminomethyl)cyclohexane.

The amine curing agent mixtures disclosed herein may include 1,3- and 1,4-bis(aminomethyl)cyclohexane, where the mixture includes at least some 1,3-bis(aminomethyl)cyclohexane. In other embodiments, the amine curing agent mixture may include at least 1 weight percent 1,3-bis(aminomethyl)cyclohexane, based on a total weight of the 1,3- and 1,4-bis(aminomethyl)cyclohexane. In various other embodiments, the amine curing agent mixture may include up to 5, 10, 15, 20, 30, 40, 50, 60, 70, 80, 90, and up to 99 weight percent 1,3-bis(aminomethyl)cyclohexane based on a total weight of the1,3- and 1,4-bis(aminomethyl)cyclohexane.

In some embodiments, the amine curing agent mixture may include an isomeric mixture of the 1,3-bis(aminomethyl)cyclohexane. In some embodiments, the amine curing agent mixture may include at least some cis-1,3-bis(aminomethyl)cyclohexane and at least some trans-1,3-bis(aminomethyl)cyclohexane. In other embodiments, the amine curing agent mixture may include at least 1 weight percent cis-1,3-bis(aminomethyl)cyclohexane, based on a total weight of the 1,3-bis(aminomethyl)cyclohexane. In various other embodiments, the amine curing agent mixture may include up to 5, 10, 15, 20, 30, 40, 50, 60, 70, 80, 90, and up to 99 weight percent cis-1,3-bis(aminomethyl)cyclohexane based on a total weight of the 1,3-bis(aminomethyl)cyclohexane. In other embodiments, the amine curing agent mixture may include at least 1 weight percent trans-1,3-bis(aminomethyl)cyclohexane, based on a total weight of the 1,3-bis(aminomethyl)cyclohexane. In various other embodiments, the amine curing agent mixture may include up to 5, 10, 15, 20, 30, 40, 50, 60, 70, 80, 90, and up to 99 weight percent trans-1,3-bis(aminomethyl)cyclohexane based on a total weight of the 1,3-bis(aminomethyl)cyclohexane.

In some embodiments, the amine curing agent mixture may include an isomeric mixture of the 1,4-bis(aminomethyl)cyclohexane. In some embodiments, the amine curing agent mixture may include at least some cis-1,4-bis(aminomethyl)cyclohexane and at least some trans-1,4-bis(aminomethyl)cyclohexane. In other embodiments, the amine curing agent mixture may include at least 1 weight percent cis-1,4-bis(aminomethyl)cyclohexane, based on a total weight of the 1,4-bis(aminomethyl)cyclohexane. In various other embodiments, the amine curing agent mixture may include up to 5, 10, 15, 20, 30, 40, 50, 60, 70, 80, 90, and up to 99 weight percent cis-1,3-bis(aminomethyl)cyclohexane based on a total weight of the 1,4-bis(aminomethyl)cyclohexane. In other embodiments, the amine curing agent mixture may include at least 1 weight percent trans-1,4-bis(aminomethyl)cyclohexane, based on a total weight of the 1,4-bis(aminomethyl)cyclohexane. In various other embodiments, the amine curing agent mixture may include up to 5, 10, 15, 20, 30, 40, 50, 60, 70, 80, 90, and up to 99 weight percent trans-1,4-bis(aminomethyl)cyclohexane based on a total weight of the 1,4-bis(aminomethyl)cyclohexane.

In some embodiments, the amine curing agent mixture may include from 1 to 97 weight percent cis 1,3-bis(aminomethyl)cyclohexane based on a total weight of the isomeric mixture of 1,3-bis(aminomethyl)cyclohexane and 1,4-bis(aminomethyl)cyclohexane. In other embodiments, the amine curing agent mixture may include from 1 to 97 weight percent trans 1,3-bis(aminomethyl)cyclohexane based on a total weight of the isomeric mixture of 1,3-bis(aminomethyl)cyclohexane and 1,4-bis(aminomethyl)cyclohexane.

In some embodiments, the amine curing agent mixture may include from 1 to 97 weight percent cis 1,4-bis(aminomethyl)cyclohexane based on a total weight of 1,3-bis(aminomethyl)cyclohexane and 1,4-bis(aminomethyl)cyclohexane. In some embodiments, the amine curing agent mixture may include from 1 to 97 weight percent trans 1,4-bis(aminomethyl)cyclohexane based on a total weight of 1,3-bis(aminomethyl)cyclohexane and 1,4-bis(aminomethyl)cyclohexane.

Preparation of the amine curing agent mixtures disclosed herein may result in the formation of impurities, such as bicyclic amines, bicyclic diamines, and bicyclic imines. In some embodiments, the various isomers of bis(aminomethyl)cyclohexane may be purified and recovered via a separation process, such as distillation.

In some embodiments, the amine curing agent mixture may include various impurities, such as may be formed during preparation of the curing agent. For example, amine curing agents disclosed herein may include bicyclic amines, such as 3-azabicyclo[3.3.1]nonane, bicyclic imines, such as 3-azabicyclo[3.3.1]non-2-ene, and bicyclic diamines, such as 3-azabicyclo[3.3.1]nonan-2-amine. In some embodiments, amine curing agent mixtures disclosed herein may include 50-100 weight percent of a mixture of the cis and trans isomers of 1,3- and 1,4-bis(aminomethyl)cyclohexane, and at least one of the following three bicyclic compounds: (i) greater than 0 to about 30 weight percent of a bicyclic amine, (ii) greater than 0 to about 25 weight percent of a bicyclic diamine, and (iii) greater than 0 to about 15 weight percent of a bicyclic imine. It has been surprisingly found that the reaction rates of various epoxy resins with such a mixture are not significantly affected by the presence of the bicyclic impurities.

In some embodiments, derivatives of the above described amines may be used to form a hardener composition. In other embodiments, the above described mixture of amines may be used to form a prepolymer hardener composition. A prepolymer hardener composition may be formed by reaction of the above described mixture of amines with an epoxy resin, epichlorohydrin, acrylonitrile, ethylene oxide, and the like.

***Other Curing Agents***

The above described mixture of amines may optionally be mixed with other conventional curing agents. The amount of other conventional curing agents admixed will depend upon the requirements placed upon the end product and the efficiencies one desires to achieve. If the end use does not require a product which has high end physical properties and/or it is not important to have lowered processing times, then greater amounts of an inexpensive conventional curing agent can be mixed with the curing agent composition of the invention. The amount of the curing agent in the water borne curing agent composition can range in the low end of from 1 to 50 wt. % based on the weight of all curing agents, but is preferably from 50 wt. % to 100 wt. %.

Conventional curing agents are usually polyamines with at least 2 nitrogen atoms per molecule and at least two reactive amine hydrogen atoms per molecule. The nitrogen atoms are linked by divalent hydrocarbyl groups. Other hydrocarbyl groups such as aliphatic, cycloaliphatic or aromatic groups may also be singly linked to some of the nitrogen atoms. These polyamines contain at least 2 carbon atoms per molecule. Preferably polyamines contain about 2 to about 6 amine nitrogen atoms per molecule, 2 to about 8 amine hydrogen atoms per molecule, and 2 to about 50 carbon atoms.

Examples of the polyamines useful as conventional curing agents for epoxy resins include aliphatic polyamines such as ethylene diamine, diethylene triamine, triethylene tetramine, tetraethylene pentamine, pentaethylene hexamine, dipropylene triamine, tributylene tetramine, hexamethylene diamine, dihexamethylene triamine, 1,2-propane diamine, 1,3-propane diamine, 1,2-butane diamine, 1,3-butane diamine, 1,4-butane diamine, 1,5-pentane diamine, 1,6-hexane diamine, 2-methyl-1,5-pentanediamine, 2,5-dimethyl-2,5-hexanediamine and the like; cycloaliphatic polyamines such as isophoronediamine, 4,4'-diaminodicyclohexylmethane, methane diamine, 1,2-diaminocyclohexane, 1,4-diaminocyclohexane, and diamines derived from "dimer acids" (dimerized fatty acids) which are produced by condensing the dimer acids with ammonia and then dehydrating and hydrogenating; adducts of amines with epoxy resins such as an adduct of isophoronediamine with a diglycidyl ether of a dihydric phenol, or corresponding adducts with ethylenediamine or m-xylylenediamine; araliphatic polyamines such as 1,3-bis(aminomethyl)benzene; aromatic polyamines such as 4,4'-methylenedianiline, 1,3-phenylenediamine and 3,5-diethyl-2,4-toluenediamine; amidoamines such as condensates of fatty acids with diethylenetriamine, triethylenetetramine, etc; and polyamides such as condensates of dimer acids with diethylenetriamine, triethylenetetramine, etc. Some commercial examples of polyamines include EPI-CURE® Curing Agent 3140 (a dimer acid-aliphatic polyamine adduct), EPI-CURE® Curing Agent 3270 (a modified aliphatic polyamine), EPI-CURE® Curing Agent 3274 (a modified aliphatic polyamine), EPI-CURE® Curing Agent 3295 (an aliphatic amine adduct), EPI-CURE® Curing Agent 3282 (an aliphatic amine adduct), EPI-CURE® Curing Agent 3055 (an amidopolyamine), EPI-CURE® Curing Agent 3046 (an amidopolyamine) and EPI-CURE® Curing Agent 3072 (modified amidoamine), and EPI-CURE® Curing Agent 3483 (an aromatic polyamine) available from Shell Chemical Company. Mixtures of polyamines may also be used.

Other curing agents that may be used in conjunction with the amine curing agent mixture described above may include phosphines, amines, quaternary ammonium and phosphonium salts, such as tetraethylammonium chloride, tetraethylammonium bromide, tetraethylammonium iodide, tetraethylammonium hydroxide, tetra(n-butyl)ammonium chloride, tetra(n-butyl)ammonium bromide, tetra(n-butyl)ammonium iodide, tetra(n-butyl)ammonium hydroxide, tetra (n-octyl) ammonium chloride, tetra(n-octyl) ammonium bromide, tetra(n-octyl)ammonium iodide, tetra(n-octyl)ammonium hydroxide, methyltris(n-octyl)ammonium chloride, bis{tetraphenylphosphoranylidene)ammonium chloride, ethyltri-p-tolylphosphonium acetate/acetic acid complex, ethyltriphenylphosphonium acetate/acetic acid complex or combinations thereof and the like as described in U.S. Pat. Nos. 5,208,317, 5,109,099 and 4,981,926.

Other aliphatic amine curing agents that may be used in conjunction with the amine curing agent mixture described above may include amines such as C₅₋₁₅ aliphatic and cycloaliphatic diamines and polyamines such as 2-methyl-1,5-pentanediamine, 1,2-diaminocyclohexane, triethylenetetramine, diethylenetriamine, 1,4- or 1,3-diaminocyclohexane, isophoronediamine, 1,3-bis(aminomethyl)benzene, isomeric mixtures of bis(4-aminocyclohexyl)methane, oligo(propylene oxide)diamine and adducts of the above amines with epoxy resins, epichlorohydrin, acrylonitrile, ethylene oxide, and the like.

In yet other embodiments, aryl amidpolyamines curing agents that may be used in conjunction with the amine curing agent mixture described above may include those which have at lease two primary amine groups, one primary amine group used for reaction with the carboxyl group on phenolic compound, the other primary amine available for reaction with the monoglycidyl compound. Examples of polyamines useful in embodiments disclosed herein may include methylene polyamines, ethylene polyamines, butylene polyamines, propylene polyamines, pentylene polyamines, hexylene polyamines, heptylene polyamines, etc. The higher homologs of such amines and related aminoalkyl-substituted piperazines are also included. Specific examples of such polyamines include ethylene diamine, triethylene tetramine, tris(2-aminoethyl)-amine, 1,2- and 1,3-propylene diamine, trimethylene diamine, 1,2- and 1,4-butanediamine, hexamethylene diamine, decamethylene diamine, octamethylene diamine, diethylene triamine, triethylene tetramine, di(heptamethylene)triamine, tripropylene tetramine, tetraethylene pentamine, trimethylene diamine, pentaethylenehexamine, di(trimethylene)triamine, p- and m-xylylene diamine, methylene dianiline, 2,4-toluenediamine, 2,6-toluenediamine, polymethylene polyphenylpolyamine, and mixtures thereof. Higher homologs, obtained by condensing two or more of the above-illustrated alkylene amines, are also useful. More preferred are those polyamines containing at least one secondary amino group in addition to the at least two primary amino groups, and multiple divalent hydrocarbon radicals having 2-4 carbon atoms.

Other curing agents known to those skilled in the art may also be used in combination with the above described mixture of amines.

In some embodiments, the other curing agents used in conjunction with the mixture of 1,3-bis(aminomethyl)cyclohexane and 1,4-bis(aminomethyl)cyclohexane or their derivatives may be present in a quantity of less than 50 weight percent in the hardener composition, based upon a total weight of the 1,3- and 1,4-bis(aminomethyl)cyclohexane and other curing agents or derivatives used in the hardening composition.

***Accelerator***

An accelerator may optionally be included to increase the cure rate of the epoxy resin-curing agent system. Various amine-compatible accelerators may be used as long as they are soluble in the amine curing agents. One specific accelerator that may be used in embodiments of the present invention is benzyl alcohol.

Examples of accelerators include metal salts such as, for example, sulfonates, phosphonates, sulfates, tetrafluoroborates, carboxylates and nitrates of Groups IA, IIA and transition metal series of the Periodic Table (CAS version), preferably Mg, Ca, Zn and Sn salts, and complexes thereof; inorganic acids such as, for example, HBF₄, H₂SO₄, H₂NSO₃H and H₃PO₄; carboxylic acids, preferably hydroxy-substituted carboxylic acids such as, for example, salicylic, lactic, glycolic and resorcylic; phenolic compounds such as, for example, phenol, t-butylphenol, nonylphenol and bisphenol A; hydroxyl comounds such as benzyl alcohol; imidazoles; cyanamide compounds such as dicyandiamide and cyanamide; sulfonamides such as, for example p-toluenesulfonamide, methanesulfonamide, N-methylbenzenesulfonamide and sulfamide; and imides such as, for example, phthalimide, succinimide, perylenetetracarboxylic diimide and saccharin.

In some embodiments, an accelerator may be included such as when the cure rate at the desired temperature is suboptimal. For example, for adhesive applications and civil engineering applications where application at low temperature is desired, it may be beneficial to include an accelerator. As another example, an accelerator may be included where the hardening composition includes hindered amine groups or where the concentration of amine groups is low.

In other embodiments, accelerators may include, for example, calcium alkylbenzenesulfonates, calcium nitrate, magnesium alkanesulfonates, tetrafluoroboric acid, salicylic acid, phenol, dichloroacetic acid, trifluoroacetic acid, and mercaptoacetic acid. In other embodiments, accelerators may include triphenylphosphine, tributylphosphine, tri(p-methylphenyl)phosphine, tri(nonylphenyl)phosphine, triphenylphosphine-triphenylborate, tetraphenylphosphine-tetraphenylborate, or a similar phosphorous-type compound; a triethylamine, benzidyldimethylamine, alpha-methybenzidyldimethylamine, 1,8-diazabicyclo {5.4.0} undec-7-ene, or a similar tertiary amine compound; 2-methylimidazol, 2-phenyl imidazole, 2-phenyl-4-methylimidazole, or a similar imidazole type compound.

Accelerators may be used in some embodiments in an amount from about 0.1 weight percent to about 20 weight percent based on the epoxy resin. In other embodiments, accelerators may be used in an amount from about 0.1 weight percent to about 5 weight percent, based on the epoxy resin.

***Solvents***

Suitable solvents which may be employed herein include, for example, alcohols, aliphatic hydrocarbons, aromatic hydrocarbons, glycol ethers, amides, sulfoxides, sulfones, combinations thereof and the like. Particularly suitable solvents include, for example, methanol, ethanol, isopropanol, hexane, heptane, octane, nonane, decane, toluene, xylene, ethylene glycol methyl ether, ethylene glycol ethyl ether, ethylene glycol n-butyl ether, ethylene glycol phenyl ether, propylene glycol methyl ether, propylene glycol phenyl ether, tripropylene glycol methyl ether, diethylene glycol methyl ether, diethylene glycol ethyl ether, diethylene glycol n-butyl ether, diethylene glycol phenyl ether, butylene glycol methyl ether, N,N-dimethylformamide, N-methylpyrolidinone, N,N-dimethylacetamide, dimethylsulfoxide, sulfolane, combinations thereof and the like.

The solvent may be used, in some embodiments, in amounts from about 5 to about 95 percent by weight based upon the combined weight of the solvent, epoxy, and the amine curing agent mixture. In other embodiments, the solvent may be used in amounts from about 20 to about 60 weight percent; and from about 30 to about 40 weight percent in yet other embodiments, where the percent by weight is based upon the combined weight of solvent, epoxy, and the amine curing agent mixture.

***Epoxy***

The epoxy resins used in embodiments disclosed herein may vary and include conventional and commercially available epoxy resins, which may be used alone or in combinations of two or more, including, for example, novolac resins, isocyanate modified epoxy resins, and carboxylate adducts, among others. In choosing epoxy resins for compositions disclosed herein, consideration should not only be given to properties of the final product, but also to viscosity and other properties that may influence the processing of the resin composition.

The epoxy resin component may be any type of epoxy resin useful in molding compositions, including any material containing one or more reactive oxirane groups, referred to herein as "epoxy groups" or "epoxy functionality." Epoxy resins useful in embodiments disclosed herein may include mono-functional epoxy resins, multi- or poly-functional epoxy resins, and combinations thereof Monomeric and polymeric epoxy resins may be aliphatic, cycloaliphatic, aromatic, or heterocyclic epoxy resins. The polymeric epoxies include linear polymers having terminal epoxy groups (a diglycidyl ether of a polyoxyalkylene glycol, for example), polymer skeletal oxirane units (polybutadiene polyepoxide, for example) and polymers having pendant epoxy groups (such as a glycidyl methacrylate polymer or copolymer, for example). The epoxies may be pure compounds, but are generally mixtures or compounds containing one, two or more epoxy groups per molecule. In some embodiments, epoxy resins may also include reactive -OH groups, which may react at higher temperatures with anhydrides, organic acids, amino resins, phenolic resins, or with epoxy groups (when catalyzed) to result in additional crosslinking.

In general, the epoxy resins may be glycidated resins, cycloaliphatic resins, epoxidized oils, and so forth. The glycidated resins are frequently the reaction product of a glycidyl ether, such as epichlorohydrin, and a bisphenol compound such as bisphenol A; C₄ to C₂₈ alkyl glycidyl ethers; Cm to C₂₈ alkyl-and alkenyl-glycidyl esters; C₁ to C₂₈ alkyl-, mono- and poly-phenol glycidyl ethers; polyglycidyl ethers of polyvalent phenols, such as pyrocatechol, resorcinol, hydroquinone, 4,4'-dihydroxydiphenyl methane (or bisphenol F), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphynyl)methane; polyglycidyl ethers of the chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms. Other examples of epoxy resins useful in embodiments disclosed herein include bis-4,4'-(1-methylethylidene) phenol diglycidyl ether and (chloromethyl) oxirane bisphenol A diglycidyl ether.

In some embodiments, the epoxy resin may include glycidyl ether type; glycidyl-ester type; alicyclic type; heterocyclic type, and halogenated epoxy resins, etc. Non-limiting examples of suitable epoxy resins may include cresol novolac epoxy resin, phenolic novolac epoxy resin, biphenyl epoxy resin, hydroquinone epoxy resin, stilbene epoxy resin, and mixtures and combinations thereof.

Suitable polyepoxy compounds may include resorcinol diglycidyl ether (1,3-bis-(2,3-epoxypropoxy)benzene), diglycidyl ether of bisphenol A (2,2-bis(p-(2,3-epoxypropoxy)phenyl)propane), triglycidyl p-aminophenol (4-(2,3-epoxypropoxy)-N,N-bis(2,3-epoxypropyl)aniline), diglycidyl ether of bromobisphenol A (2,2-bis(4-(2,3-epoxypropoxy)3-bromo-phenyl)propane), diglycidyl ether of bisphenol F (2,2-bis(p-(2,3-epoxypropoxy)phenyl)methane), triglycidyl ether of meta- and/or para-aminophenol (3-(2,3-epoxypropoxy)N,N-bis(2,3-epoxypropyl)aniline), and tetraglycidyl methylene dianiline (N,N,N',N'-tetra(2,3-epoxypropyl) 4,4'-diaminodiphenyl methane), and mixtures of two or more polyepoxy compounds. A more exhaustive list of useful epoxy resins found may be found in Lee, H. and Neville, K., Handbook of Epoxy Resins, McGraw-Hill Book Company, 1982 reissue.

Other suitable epoxy resins include polyepoxy compounds based on aromatic amines and epichlorohydrin, such as N,N'-diglycidyl-aniline; N,N'-dimethyl-N,N'-diglycidyl-4,4'-diaminodiphenyl methane; N,N,N',N'-tetraglycidyl-4,4'-diaminodiphenyl methane; N-diglycidyl-4-aminophenyl glycidyl ether; and N,N,N',N'-tetraglycidyl-1,3-propylene bis-4-aminobenzoate. Epoxy resins may also include glycidyl derivatives of one or more of: aromatic diamines, aromatic monoprimary amines, aminophenols, polyhydric phenols, polyhydric alcohols, polycarboxylic acids.

Useful epoxy resins include, for example, polyglycidyl ethers of polyhydric polyols, such as ethylene glycol, triethylene glycol, 1,2-propylene glycol, 1,5-pentanediol, 1,2,6-hexanetriol, glycerol, and 2,2-bis(4-hydroxy cyclohexyl)propane; polyglycidyl ethers of aliphatic and aromatic polycarboxylic acids, such as, for example, oxalic acid, succinic acid, glutaric acid, terephthalic acid, 2,6-napthalene dicarboxylic acid, and dimerized linoleic acid; polyglycidyl ethers of polyphenols, such as, for example, bis-phenol A, bis-phenol F, 1,1-bis(4-hydroxyphenyl)ethane, 1,1-bis(4-hydroxyphenyl)isobutane, and 1,5-dihydroxy naphthalene; modified epoxy resins with acrylate or urethane moieties; glycidylamine epoxy resins; and novolac resins.

The epoxy compounds may be cycloaliphatic or alicyclic epoxides. Examples of cycloaliphatic epoxides include diepoxides of cycloaliphatic esters of dicarboxylic acids such as bis(3,4-epoxycyclohexylmethyl)oxalate, bis(3,4-epoxycyclohexylmethyl)adipate, bis(3,4-epoxy-6-methylcyclohexylmethyl)adipate, bis(3,4-epoxycyclohexylmethyl)pimelate; vinylcyclohexene diepoxide; limonene diepoxide; dicyclopentadiene diepoxide; and the like. Other suitable diepoxides of cycloaliphatic esters of dicarboxylic acids are described, for example, in U.S. Patent No. 2,750,395.

Other cycloaliphatic epoxides include 3,4-epoxycyclohexylmethyl-3,4-epoxycyclohexane carboxylates such as 3,4-epoxycyclohexylmethyl-3,4-epoxycyclohexane carboxylate; 3,4-epoxy-1-methylcyclohexyl-methyl-3,4-epoxy-1-methylcyclohexane carboxylate; 6-methyl-3,4-epoxycyclohexylmethylmethyl-6-methyl-3,4-epoxycyclohexane carboxylate; 3,4-epoxy-2-methylcyclohexylmethyl-3,4-epoxy-2-methylcyclohexane carboxylate; 3,4-epoxy-3-methylcyclohexyl-methyl-3,4-epoxy-3-methylcyclohexane carboxylate; 3,4-epoxy-5-methylcyclohexyl-methyl-3,4-epoxy-5-methylcyclohexane carboxylate and the like. Other suitable 3,4-epoxycyclohexylmethyl-3,4-epoxycyclohexane carboxylates are described, for example, in U.S. Patent No. 2,890,194.

Further epoxy-containing materials which are particularly useful include those based on glycidyl ether monomer. Examples are di- or polyglycidyl ethers of polyhydric phenols obtained by reaction of a polyhydric phenol with an excess of chlorohydrin such as epichlorohydrin. Such polyhydric phenols include resorcinol, bis(4-hydroxyphenyl)methane (known as bisphenol F), 2,2-bis(4-hydroxyphenyl)propane (known as bisphenol A), 2,2-bis(4'-hydroxy-3',5'-dibromophenyl)propane, 1,1,2,2-tetrakis(4'-hydroxy-phenyl)ethane or condensates of phenols with formaldehyde that are obtained under acid conditions such as phenol novolacs and cresol novolacs. Examples of this type of epoxy resin are described in U.S. Patent No. 3,018,262. Other examples include di- or polyglycidyl ethers of polyhydric alcohols such as 1,4-butanediol, or polyalkylene glycols such as polypropylene glycol and di- or polyglycidyl ethers of cycloaliphatic polyols such as 2,2-bis(4-hydroxycyclohexyl)propane. Other examples are monofunctional resins such as cresyl glycidyl ether or butyl glycidyl ether.

Another class of epoxy compounds is polyglycidyl esters and poly(beta-methylglycidyl) esters of polyvalent carboxylic acids such as phthalic acid, terephthalic acid, tetrahydrophthalic acid or hexahydrophthalic acid. A further class of epoxy compounds are N-glycidyl derivatives of amines, amides and heterocyclic nitrogen bases such as N,N-diglycidyl aniline, N,N-diglycidyl toluidine, N,N,N',N'-tetraglycidyl bis(4-aminophenyl)methane, triglycidyl isocyanurate, N,N'-diglycidyl ethyl urea, N,N'-diglycidyl-5,5-dimethylhydantoin, and N,N'-diglycidyl-5-isopropylhydantoin.

Still other epoxy-containing materials are copolymers of acrylic acid esters of glycidol such as glycidylacrylate and glycidylmethacrylate with one or more copolymerizable vinyl compounds. Examples of such copolymers are 1:1 styrene-glycidylmethacrylate, 1:1 methyl-methacrylateglycidylacrylate and a 62.5:24:13..5 methylmethacrylate-ethyl acrylate-glycidylmethacrylate.

Epoxy compounds that are readily available include octadecylene oxide; glycidylmethacrylate; D.E.R. 331 (bisphenol A liquid epoxy resin), and D.E.R. 332 (diglycidyl ether of bisphenol A) available from The Dow Chemical Company, Midland, Michigan; vinylcyclohexene dioxide; 3,4-epoxycyclohexylmethyl-3,4-epoxycyclohexane carboxylate; 3,4-epoxy-6-methylcyclohexyl-methyl-3,4-epoxy-6-methylcyclohexane carboxylate; bis(3,4-epoxy-6-methylcyclohexylmethyl) adipate; bis(2,3-epoxycyclopentyl) ether; aliphatic epoxy modified with polypropylene glycol; dipentene dioxide; epoxidized polybutadiene; silicone resin containing epoxy functionality; flame retardant epoxy resins (such as a brominated bis-phenol type epoxy resin available under the tradename D.E.R. 580, available from The Dow Chemical Company, Midland, Michigan); 1,4-butanediol diglycidyl ether of phenolformaldehyde novolac (such as those available under the tradenames D.E.N. 431 and D.E.N. 438 available from The Dow Chemical Company, Midland, Michigan); and resorcinol diglycidyl ether Although not specifically mentioned, other epoxy resins under the tradename designations D.E.R. and D.E.N. available from the Dow Chemical Company may also be used.

Epoxy resins may also include isocyanate modified epoxy resins. Polyepoxide polymers or copolymers with isocyanate or polyisocyanate functionality may include epoxy-polyurethane copolymers. These materials may be formed by the use of a polyepoxide prepolymer having one or more oxirane rings to give a 1,2-epoxy functionality and also having open oxirane rings, which are useful as the hydroxyl groups for the dihydroxyl-containing compounds for reaction with diisocyanate or polyisocyanates. The isocyanate moiety opens the oxirane ring and the reaction continues as an isocyanate reaction with a primary or secondary hydroxyl group. There is sufficient epoxide functionality on the polyepoxide resin to enable the production of an epoxy polyurethane copolymer still having effective oxirane rings. Linear polymers may be produced through reactions of diepoxides and diisocyanates. The di- or polyisocyanates may be aromatic or aliphatic in some embodiments.

Other suitable epoxy resins are disclosed in, for example, U.S. Patent Nos. 7,163,973, 6,632,893, 6,242,083, 7,037,958, 6,572,971, 6,153,719, and 5,405,688 and U.S. Patent Application Publication Nos. 20060293172 and 20050171237, each of which is hereby incorporated herein by reference.

***Catalysts***

Catalysts may include imidazole compounds including compounds having one imidazole ring per molecule, such as imidazole, 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-methylimidazole, 1-cyanoethyl-2-ethyl-4-methylimidazole, 1-cyanoethyl-2-undecylimidazole, 1 - cyanoethyl-2-isopropylimidazole, 1-cyanoethyl-2-phenylimidazole, 2,4-diamino-6-[2'-methylimidazolyl-(1)']-ethyl-s-triazine, 2,4-diamino-6-[2'-ethyl-4-methylimidazolyl-(1)']-ethyl-s-triazine, 2,4-diamino-6-[2'-undecylimidazolyl-(1)']-ethyl-s-triazine, 2-methylimidazolium-isocyanuric acid adduct, 2-phenylimidazolium-isocyanuric acid adduct, 1-aminoethyl-2-methylimidazole, 2-phenyl-4,5-dihydroxymethylimidazole, 2-phenyl-4-methyl-5-hydroxymethylimidazole, 2-phenyl-4-benzyl-5-hydroxymethylimidazole and the like; and compounds containing 2 or more imidazole rings per molecule which are obtained by dehydrating above-named hydroxymethyl-containing imidazole compounds such as 2-phenyl-4,5-dihydroxymethylimidazole, 2-phenyl-4-methyl-5-hydroxymethylimidazole and 2-phenyl-4-benzyl-5-hydroxymethylimidazole; and condensing them by deformaldehyde reaction, e.g., 4,4'-methylene-bis-(2-ethyl-5-methylimidazole), and the like.

***Additives***

The curing agent composition of the invention may include other additives, such as fillers, elastomers, stabilizers, extenders, plasticizers, accelerators, pigments, reinforcing agents, flow control agents and flame retardants depending on the application. If necessary, the composition of the invention may be combined with a thermoplastic resin, thermoplastic elastomer, organic synthetic rubber, silicone-type, or a similar stress lowering agent; a carnauba wax, higher fatty acids, synthetic waxes, or similar waxes; carbon black, or a similar coloring agent; halogen trap agents, etc. The curable compositions disclosed herein may be used in coatings and certain civil engineering applications such as for floor topping, grouts and adhesives.

For coating applications, the curable epoxy resin component, or the amine curing agent mixture, may also contain pigments of the conventional type such as iron oxides, lead oxides, strontium chromate, carbon black, titanium dioxide, talc, barium sulfate, phthalocyanine blue and green, cadmium red, chromic green, lead silicate, silica, silicates and the like. Such pigments may be added to the polyamine curing agent component or the epoxy resin component prior to mixing them together. However, iron blue pigment, calcium carbonate and pigments considered reactive because of their basic nature may not be compatible in the curable compositions when used in appreciable quantities. These normally are added to the curing agent component only. Defoamers, tints, slip agents, thixotropes, etc., are common auxiliary components to most coatings and may be employed in the epoxy resin composition of the present invention. The amount of additive used may range from 20 to 100 parts by weight based on the weight of the epoxy resin and the amine curing agent mixture.

For floor topping application, the curable epoxy resin component or the amine curing agent mixture may also contain fillers such as sand, other siliceous materials, iron or other metals. Small amounts of thixotropic agents, coloring agents, inert plasticizers, and leveling agents may also be incorporated in the curable composition if desired. These curable flooring compositions may be trowelled, sprayed, or brushed on to a floor substrate.

Reinforcing agents may be added to either of the components, epoxy or amines curing agent mixture, and include natural and synthetic fibers in the form of woven, mat, monofilament, chopped fibers, and the like. Other materials for reinforcing include glass, ceramics, nylon, rayon, cotton, aramid, graphite and combinations thereof. Suitable fillers include inorganic oxides, inorganic carbonates, ceramic microspheres, plastic microspheres, glass microspheres, clays, sand, gravel and combinations thereof. The fillers can be used in amounts suitably from 0 to 100 parts by weight of the combined amount of the epoxy and the amine curing agent mixture.

The polymeric binder may include a wide variety of other additives such as, for example, hardeners, dyes, pigments and flow modifiers, fire-retardants, self extinguishing agents, desiccants and all manner of additives which are used herein for their known purposes. Examples of fire retardants include: monoammonium phosphate, diammonium phosphate, and aluminum trihydrate. These additives may be in the form of liquids or particles so long as the binder remains solid, has the desired particle size, and impart no adverse effects to the binder.

***Hardenable Compositions***

In some embodiments, a hardenable composition or a curable formulation may be formed by admixing one or more epoxy resins with the amine curing agent mixture as described above. In other embodiments, a hardenable composition or a curable formulation may be formed by admixing one or more epoxy resins with a prepolymer hardener formed by reaction of an epoxy with the amine curing agent mixture as described above. In other embodiments, a curable formulation may be formed by admixing one or more epoxy resins with the amine curing agent mixture and a prepolymer hardener formed by reaction of an epoxy with the amine curing agent mixture.

The amount of epoxy resins used in the curable formulation may depend on the targeted molecular weight and epoxy functionality. In some embodiments, the epoxy resin may be used in an amount of from about 30 wt. % to about 85 wt. %, based on the total weight of the curable formulation (the epoxy, the amine curing agent mixture, and the prepolymer hardener formed from the amine curing agent mixture). In other embodiments, the epoxy resin may be used in the curable formulation in an amount from about 40 wt. % to about 75 wt. %; and from about 45 wt. % to about 70 wt. % in yet other embodiments, based on the total weight of the curable formulation.

In some embodiments, the epoxy resin may be cured with the above described mixture of 1,3- and 1,4-bis(aminomethyl)cyclohexane. In other embodiments, the epoxy resin may be cured with the above described mixture of 1,3- and 1,4-bis(aminomethyl)cyclohexane in combination with one or more other epoxy curing agents such as phenolics, amines, carboxylic acids, phenol formaldehyde resins, and anhydrides, as well as through the hydroxyl group or an epoxy group.

In some embodiments, the epoxy resins may be reacted with a prepolymer hardener such as, for example, a prepolymer hardener formed by reaction of an epoxy with the mixture of 1,3- and 1,4-bis(aminomethyl)cyclohexane. In other embodiments, the epoxy resin may be cured with a prepolymer hardener formed by the reaction of an epoxy with the above described mixture of 1,3- and 1,4-bis(aminomethyl)cyclohexane in combination with one or more other epoxy curing agents such as phenolics, amines, carboxylic acids, phenol formaldehyde resins, and anhydrides. For example, the prepolymer hardener may be an amine-terminated polymer, or a polymer mixture including an amine-terminated polymer and one or more of a carboxy-terminated polymer, a phenol-terminated polymer, a multifunctional amine, carboxylic acid or phenol.

***Curing and End Uses***

The above described components (including the mixture of 1,3- and 1,4-bis(aminomethyl)cyclohexane and epoxy, and optionally other components such as the above described other curing agents, additives, and accelerators) may be mixed and/or cured at a temperature between -25°C to 200°C. In other embodiments, the temperature at which the curing reaction may be conducted may depends on the specific compounds and hardening compositions employed. In other embodiments, the curing temperature may range from about 15°C to about 200°C; from about 30°C to about 180°C in other embodiments; from about 40°C to about 160°C in other embodiments; and from about 50°C to about 150°C in yet other embodiments. In other embodiments, the curable formulation may be cured at a temperature within the range of from about -40°C to about 100°C.

The curable formulation may be cured at the previous curing temperatures for a time effective to cure the epoxy resin. In some embodiments, the curing time may be less than 72 hours. In other various embodiments, the curing time may be less than 48 hours, less than 24 hours, less than 16 hours, less than 12 hours, less than 10 hours, less than 8 hours, less than 6 hours, less than 4 hours, and less than 2 hours. In other embodiments, the curing time may be less than 60 minutes, less than 45 minutes, or less than 30 minutes.

The mixture of amines may be present in the composition in an amount effective to cure the epoxy resin, generally an amount within the range of about 0.6 to about 2 equivalents, based on the epoxy resin.

In some embodiments, the amine curing agent mixture is used in an amount of from 0 wt. % to about 1 wt. %. In other embodiments, the amine curing agent mixture may be used in an amount from about 0.01 wt. % to about 0.5 wt. %; and from about 0.1 wt. % to about 0.2 wt. % in yet other embodiments, based on the combined weight of the epoxy and the amine curing agent mixture.

The curable compositions described above may be used as a coating, and may be applied to a substrate by brush, spray, or rollers. Aside from coating applications, the curing agent compositions of the invention may be used in such applications as flooring, casting, crack or defect repair, molding, adhesives, potting, filament winding, encapsulation, structural and electrical laminates, composites and the like.

The curable compositions may be used in a variety of industrial applications or other epoxy applications such as coatings, laminates and composites. Industrial coatings are surface protective coatings (paint coatings) applied to substrates that are cured or crosslinked to form continuous films for decorative purposes as well as to protect the substrate. A protective coating ordinarily comprises an organic polymeric binder, pigments, and various paint additives, where the polymeric binder acts as a fluid vehicle for the pigments and imparts rheological properties to the fluid paint coating. Upon curing or crosslinking, the polymeric binder hardens and functions as a binder for the pigments and provides adhesion of the dried paint film to the substrate. The pigments may be organic or inorganic and may functionally contribute to opacity and color in addition to durability and hardness.

Powder paints may be obtained which comprise the curable compositions described herein, and suitable pigments, catalysts and additives: These powder paints and coatings therefrom may have a surprisingly good combination of properties. Depending on the choice and the amount of epoxy, amine curing agent mixture, and other optional components, powder paints derived therefrom may have good flow, good chemical resistance, high gloss, high scratch resistance, good mechanical properties, good outdoor durability and good color stability.

In other embodiments, the curable compositions described herein may form part of water-based and oil-based dispersions. For example, water-dispersed coating compositions containing the curable compositions disclosed herein may be used for can and coil coating compositions.

The curable compositions may be used for structural applications and may contain epoxy resins based on or containing diglycidyl ethers of dihydric phenols, a curing agent containing the amine curing agent mixture as described above, and an aliphatic alcohol-alkylene oxide adduct diluent. The curable compositions used for coating applications may contain diglycidyl ethers of dihydric phenols, and/or the fusion products of the diglycidyl ethers of dihydric phenols with bisphenols, a curing agent containing the amine curing agent mixture as described above, and an aliphatic alcohol-alkylene oxide adduct diluent. The epoxy resin maybe blended or mixed with the diluent-containing amine curing agent mixture or blended with a prepolymer hardener derived from the amine curing agent mixture, the aliphatic alcohol-alkylene oxide adduct and optionally the accelerator simultaneously or in any order at a temperature below the cure temperature, such as below about 100°C, for example. The ratio of epoxy resin to the amine curing agent mixture may range from about 10:90 to about 90:10 in some embodiments; and from about 20:80 to about 80:20 by weight percent in yet other embodiments.

In other embodiments, the curable formulations may be used in marine coatings, protective coatings, civil engineering applications, adhesives, and as one component of a composite. For example, composites formed using the curable formulations disclosed herein may be used in windmill blades and other applications. In some embodiments, the epoxy resins used for these various applications may include a diglycidyl-ether of Bisphenol A, a diglycidyl-ether of Bisphenol F, or epoxy phenolic novolac resin.

***Examples***

Example 1

In order to evaluate the curing reaction of epoxy resins with cycloaliphatic diamines, differential scanning calorimetry (DSC) is utilized. A bisphenol A based epoxy resin (EPON® 828, available from Shell) is mixed with diamine (either an amine curing agent mixture including the cis and trans isomers of 1,3- and 1,4-bis(aminomethyl)cyclohexane, referred to herein as UNOXOL® Diamine (Sample 1), or isophorone diamine (IPDA) (Comparative Sample 1)) in an equivalent ratio of 1:1 and the curing reaction study is carried out from 20°C to 120°C at a heating rate of 1°C/min in the DSC. The temperature at which the heat flow of the reaction versus temperature reaches a maximum value is considered the curing temperature. The curing reaction of UNOXOL® Diamine with EPON® 828 exhibits a peak at 65.14°C since both amine groups have similar reactivity, while the curing reaction of isophorone diamine (IPDA) with EPON® 828 exhibits two peaks at 69.75°C and 93.69°C, corresponding to the difference in the reactivity of the two different amine groups in IPDA. The results show that the UNOXOL® Diamine is considerably more reactive than IPDA with epoxy resins. Hence, UNOXOL® Diamine may be used to cure epoxy resins at lower temperatures than IPDA.

The performance properties of epoxy coatings cured with either UNOXOL® Diamine or isophorone diamine are shown in Table 1. The lap shear strength of steel to steel adhered with epoxy resin (EPON® 828) cured with UNOXOL® Diamine at 65°C for one hour is considerably higher than for the corresponding system cured with IPDA. The hydrolytic resistance of an epoxy primer coating based on a mixture of three epoxy resins is determined as a function of the diamine curing agent by immersing the samples into water for one week after the coatings are allowed to cure at room temperature for two days. The coatings cured with IPDA show blistering while the coatings cured with UNOXOL® Diamine do not show any blistering. Hence, UNOXOL® Diamine may lead to epoxy coatings with superior properties when compared to IPDA.

**Table 1.**

| Properties | Sample 1 UNOXOL® Diamine Cured Epoxy | Comparative Sample 1 Isophorone Diamine Cured Epoxy |
|---|---|---|
| Adhesion (Lap Shear Stress, psi) | 432 | 248 |
| Hydrolytic Resistance | Good Appearance | Blistering |

Example 2

A formulation containing pre-polymer hardener of UNOXOL® diamine (Sample 2) is compared with an industry standard hardener ANCAMINE® 1618 (available from Air Products) (Comparative Sample 2). 20% benzyl alcohol is added in a formulation containing pre-polymer hardener of UNOXOL® diamine. D.E.R. 331 is used as the epoxy resin in both of the formulations. The formulations are applied on cold rolled steel (wet thickness of approximately 10 mm). The weight percentages of the formulations are shown in Table 2. The physical properties of these formulations are shown in Table 3, using the industry standard tests referenced in the table.

As can be seen from Table 3, the formulation containing the prepolymer hardener of cis and trans isomers of 1,3- and 1,4-bis(aminomethyl)cyclohexane (Formulation 2), develop better pencil hardness and pendulum hardness from the beginning (day 1), and maintain better hardness throughout (day 7). The thin film drying times are significantly better for the formulation containing the prepolymer hardener of cis and trans isomers of 1,3- and 1,4-bis(aminomethyl)cyclohexane as compared to the industry standard ANCAMINE® 1618.

**Table 2: Raw Material Charges (Comparison with ANCAMINE® 1618)**

| Raw Materials | Comparative Sample 2 | Sample 2 |
|---|---|---|
| D.E.R. 331 | 62.5 wt.% | 74.9 wt.% |
| ANCAMINE® 1618 | 37.5 wt.% | -- |
| UNOXOL diamine prepolymer Hardener* with 20% benzyl alcohol | -- | 25.1 wt.% |

| | | |
|---|---|---|
| * prepolymer made with D.E.R. 331 | | |

**Table 3: Physical Properties Comparison**

| Formulation | Pencil Hardness¹ | | | Konig Pendulum Hardness (osc) | | | Thin Film Dry Times | |
|---|---|---|---|---|---|---|---|---|
| | 1 day | 3 days | 7 days | 1 day | 3 days | 7 days | Dust Free (h) | Dry through (h) |
| Comparative Sample 2 | HB | F | F | 78 | 127 | 137 | 7 | 15 |
| Sample 2 | H | H | H | 148 | 153 | 150 | 3.5 | 5.5 |

| | | | | | | | | |
|---|---|---|---|---|---|---|---|---|
| ¹Softest 4B-3B-2B-B-HB-F-H-2H-3H-4H-5H-6H Hardest | | | | | | | | |

Example 3

A formulation containing pre-polymer hardener of UNOXOL® diamine (Sample 3)is compared with a similar pre-polymer hardener of IPDA (Comparative Sample 3). D.E.R. 331 is used as the epoxy resin in both formulations and both are accelerated with benzyl alcohol. The formulations are shown in Table 4. The formulations are applied on a Bonderite panel (wet thickness of 10 mm). The physical properties of these formulations are shown in Tables 5 and 6.

As can be seen from Tables 4-6, the formulation containing the prepolymer hardener of cis and trans isomers of 1,3- and 1,4-bis(aminomethyl)cyclohexane (Formulation 2), develop better pencil hardness and pendulum hardness beginning at day 1 and maintain better hardness through day 7. Formulation 2 also has better gloss development after 7 days. The thin film drying times are significantly better for the formulation containing the prepolymer hardener of cis and trans isomers of 1,3- and 1,4-bis(aminomethyl)cyclohexane as compared to the IPDA prepolymer hardener.

**Table 4: Raw Material Charges (Comparison with IPDA adduct)**

| Raw Materials | Comparative Sample 3 | Sample 3 |
|---|---|---|
| D.E.R.331 | 66.2 wt.% | 69.2 wt.% |
| IPDA prepolymer hardener with 40% benzyl alcohol | 33.8 wt.% | -- |
| UNOXOL diamine prepolymer hardener* with 40% benzyl alcohol | -- | 30.8 wt.% |

| | | |
|---|---|---|
| * prepolymer made with D.E.R. 331 | | |

**Table 5: Physical Properties Comparison**

| Formulation | Pencil Hardness¹ | | | Konig Pendulum Hardness (osc) | | | Thin Film Dry Times | |
|---|---|---|---|---|---|---|---|---|
| | 1 day | 3 days | 7 days | 1 day | 3 days | 7 days | Dust Free (h) | Dry through (h) |
| Comparative Sample 3 | B | B | HB | 81 | 129 | 136 | 7 | 13 |
| Sample 3 | F | F | F | 131 | 134 | 137 | 2.5 | 4.5 |

| | | | | | | | | |
|---|---|---|---|---|---|---|---|---|
| ¹Softest 4B-3B-2B-B-HB-F-H-2H-3H-4H-5H-6H Hardest | | | | | | | | |

**Table 6: Physical Properties Comparison**

| Formulation | Gloss | | | Impact (in-lb) | |
|---|---|---|---|---|---|
| | 1 day | 3 days | 7 days | Forwards | Reverse |
| Comparative Sample 3 | 74 | 98 | 97 | 20 | <10 |
| Sample 3 | 107 | 114 | 101 | 20 | <10 |

| | | | | | |
|---|---|---|---|---|---|
| ¹ Softest 4B-3B-2B-B-HB-F-H-2H-3H-4H-5H-6H Hardest. | | | | | |

Example 4: Reactivity and Fracture Toughness

The reactivity and fracture toughness of UNOXOL® diamine (Sample 4) and IPDA (Comparative Sample 4) are compared in a formulation containing D.E.R. 331. The formulations are shown in Table 7 below.

**Table 7**

| Raw Materials | Comparative Sample 4 | Sample 4 |
|---|---|---|
| D.E.R. 331 | 81.8 wt.% | 84.1 wt.% |
| IPDA | 18.2 wt.% | -- |
| UNOXOL diamine | -- | 15.9 wt.% |

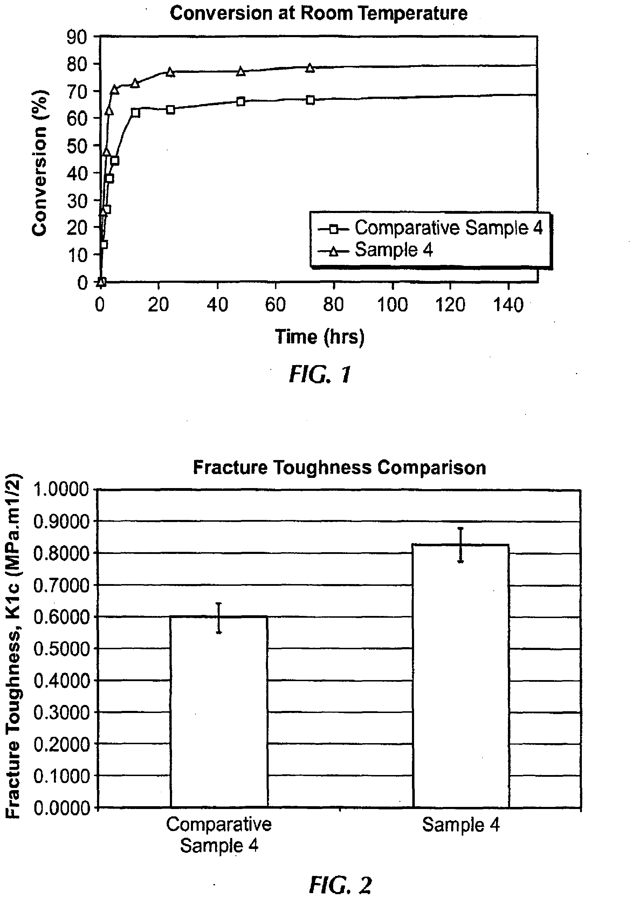

The reactivity (kinetic) study is performed using a Differential Scanning Calorimeter (DSC). The reactivity is measured as % conversion at room temperature. The reactivity comparison data is shown in Figure 1. When cured at room temperature, the formulation containing UNOXOL® diamine reaches 80% conversion in less than 24 hours, whereas the IPDA based formulation reaches a maximum conversion of 65%. Because of this high reactivity, formulations containing UNOXOL® diamine are believed to develop better properties at room temperature in less than 24 hours.

Fracture toughness of the samples is measured, the results of which are shown in Figure 2. The fracture toughness study is performed on a 1/8 inch clear casting according to ASTM D5045. As can be seen, fracture toughness for the formulations containing UNOXOL® diamine is greater than that for samples containing IPDA.

Example 5

In this Example, the reactivity of UNOXOL® diamine and various mixture of UNOXOL® diamine and bicyclic amine (BA), bicyclic diamine (BDA), and bicyclic imine (BI) impurities are measured. The diamine compositions (DC1, DC2, etc.) are listed in Table 8.

**Table 8**

| Product | DC1 | DC2 | DC3 | DC4 |
|---|---|---|---|---|
| UNOXOL® Diamine (wt. %) | 99.8 | 97 | 89.4 | 75.3 |
| 3-azabicyclo[3.3.1]nonane - BA (wt. %) | -- | -- | 3.4 | 0.3 |
| 3-azabicyclo[3.3.1]non-2-ene - BI (wt. %) | -- | 1 | 2 | 14.5 |
| 3-azabicyclo[3.3.1]nonan-2-amine - BDA (wt. %) | -- | 2 | 1.8 | 9.1 |

The diamine compositions are mixed with D.E.R. 331, according to the formulations listed in Table 9, and compared to the reactivity of D.E.R. 331 with IPDA, the industry standard. The reactivity of the D.E.R. 331 mixtures is measured using a Differential Scanning Calorimeter (DSC) by monitoring enthalpy during the curing reaction. The reactivity is measured as percent conversion at room temperature. The results of the reactions are compared in Table 10.

**Table 9**

| Raw Materials | Comparative Sample 5 | Sample 5 | Sample 6 | Sample 7 | Sample 8 |
|---|---|---|---|---|---|
| D.E.R.331 | 81.47 | 84.13 | 84.13 | 82.86 | 81.17 |
| IPDA | 18.43 | -- | -- | -- | -- |
| DC1 | -- | 15.87-- | -- | -- | -- |
| DC2 | -- | -- | 15.87 | -- | -- |
| DC3 | -- | -- | -- | 17.14 | -- |
| DC4 | -- | -- | -- | -- | 18.83 |

**Table 10**

| | Percent Conversion | | | | |
|---|---|---|---|---|---|
| Time (hours) | Comparative Sample 5 | Sample 5 | Sample 6 | Sample 7 | Sample 8 |
| 1 | 13.8 | 25.6 | 30.6 | 25.1 | 22.3 |
| 2 | 26.9 | 47.5 | 52.4 | 47.7 | 43.2 |
| 3 | 38.1 | 63 | 63.4 | 59.4 | 60 |
| 5 | 44.7 | 70.4 | 70.5 | 71.6 | 68 |
| 12 | 62.4 | 72.6 | 76.6 | 73.4 | 74 |
| 24 | 63.3 | 76.6 | 77.9 | 77.1 | 74.8 |
| 48 | 66.1 | 77.1 | 78.0 | 76.2 | 76.2 |

As shown by the results in Table 10, there is no significant difference in the reaction rate of UNOXOL® diamine and various mixtures of UNOXOL® diamine with bicyclic amine, bicyclic diamine, and bicyclic imine impurities with an epoxy resin. Impurities may be up to 25 weight percent without a significant drop in reactivity. Additionally, the reaction rate of each of the diamine compositions was significantly faster than the industry standard IPDA.

As shown by the results in Table 10, purification of the diamine mixture may not be required to result in a suitable reaction rate. In some embodiments, diamine compositions may include 50-100 weight percent of UNOXOL® diamine, 0-30 weight percent bicyclic amine, 0-25 weight percent bicyclic diamine, and 0-15 weight percent bicyclic imine.

Physical properties of the resulting resins are measured to determine the impact of the bicyclic impurities on the resulting resin. The measured properties are given Table 11. Glass transition temperature was measured using DMTA.

**Table 11.**

| Sample No. | T_{g} (°C) | Tensile Strength MPa | Tensile Modulus GPa | % Strain at Break (%) |
|---|---|---|---|---|
| Sample 5 | 141 | 83 | 2.1 | 7.8 |
| Sample 6 | 143 | 82 | 2.0 | 9.2 |
| Sample 7 | 139 | 8.3 | 2.2 | 7.5 |
| Sample 8 | 132 | 84 | 2.3 | 6.7 |

Samples 7 and 8 have a slightly lower glass transition temperature as compared to Samples 5 and 6. Tensile strength and tensile modulus are comparable for all samples, and percent strain at break is slightly lower for Sample 8. Overall, good material properties are obtained regardless of the bicyclic impurities.

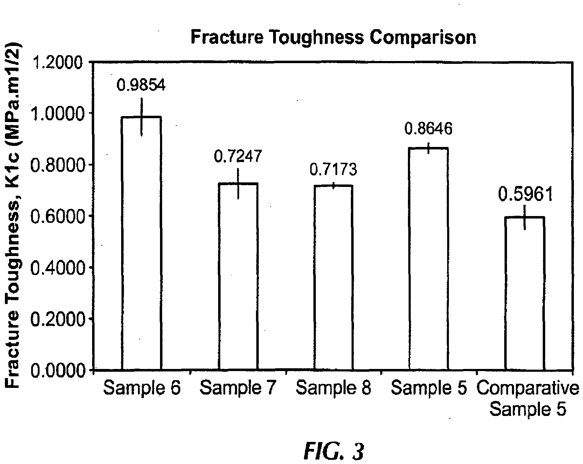

Fracture toughness of Samples 5-9 and Comparative Sample 5 is measured, the results of which are shown in Figure 3. The fracture toughness study is performed on a 1/8 inch clear casting according to ASTM D5045. As can be seen, fracture toughness for the formulations containing UNOXOL® diamine, including the bicyclic impurities, is greater than that for Comparative Sample 5 containing IPDA.

Advantageously, embodiments disclosed herein may provide for improved hydrolytic resistance; excellent adhesion properties, faster cure times, and a lower temperature cure, good color / haze; and good chemical resistance. Moreover, embodiments disclosed herein may provide for improved fracture toughness as compared to standard formulations.

Isomeric mixtures of 1,3- and 1,4-bis(aminomethyl)cyclohexane may be used to cure epoxy resin at lower temperatures and give coatings with superior properties as compared to other aliphatic diamines and corresponding prepolymer hardeners like isophorone diamine or its derivatives.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A hardener composition for epoxy resins, the hardener composition comprising:
(a) 1,3-bis(aminomethyl)cyclohexane; and
(b) 1,4-bis(aminomethyl)cyclohexane.

2. The hardener composition of claim 1, wherein the hardener composition comprises cis and trans isomers of at least one of component (a) and component (b).

3. The hardener composition of one of claim 1 and claim 2, wherein the hardener composition comprises cis and trans isomers of both component (a) and component (b).

4. The hardener composition of any one of claims 1-3, wherein the hardener composition comprises at least 5 weight percent component (b) based on a total weight of component (a) and component (b).

5. The hardener composition of claim 2, wherein the hardener composition comprises:
1 to 97 weight percent cis 1,3 bis(aminomethyl)cyclohexane;
1 to 97 weight percent trans 1,3 bis(aminomethyl)cyclohexane;
1 to 97 weight percent cis 1,4-bis(aminomethyl)cyclohexane; and
1 to 97 weight percent trans 1,4-bis(aminomethyl)cyclohexarie;
wherein the above percentages are based upon a total weight of the cis 1,3-bis(aminomethyl)cyclohexane, the trans 1,3-bis(aminomethyl)cyclohexane, the cis 1,4-bis(aminomethyl)cyclohexane, and the trans 1,4-bis(aminomethyl)cyclohexane.

6. The hardener composition of claim 1, wherein the hardener comprises 50-100 weight percent of a mixture of (a) and (b), 0 to 30 weight percent of a bicyclic amine, 0 to 25 weight percent of a bicyclic diamine, and 0 to about 15 weight percent of a bicyclic imine.

7. The hardener composition of any one of claims 1-5, wherein the hardener comprises 50-100 weight percent of a mixture of (a) and (b), and at least one of the following three bicyclic compounds: (i) greater than 0 to about 30 weight percent of a bicyclic amine, (ii) greater than 0 to about 25 weight percent of a bicyclic diamine, and (iii) greater than 0 to about 15 weight percent of a bicyclic imine.

8. A prepolymer hardener composition for epoxy resins, the prepolymer hardener composition comprising the reaction product of an epoxy with the hardener composition of any one of claims 1-7.

9. A curable formulation, comprising:
a hardener composition as claimed in any one of claims 1-7; and
an epoxy resin.

10. A curable formulation, comprising:
a prepolymer hardener composition as claimed in claim 8; and
an epoxy resin.

11. A method for adhering two substrates, comprising:
applying an epoxy resin and the hardener composition of any one of claims 1-7 to one or both of the substrates; and
bringing the substrates into a contacting relationship.

12. The method of claim 11, further comprising curing the epoxy resin at a temperature in the range from about -20°C to about 100°C for a time of less than 24 hours to cure the epoxy resin.

13. A method for coating a substrate, comprising:
applying a coating composition to a substrate;
wherein the coating composition includes an epoxy resin and at least one of the hardener composition of any one of claims 1-7 and the prepolymer hardener composition of claim 8.

14. An aqueous epoxy resin or epoxy resin dispersion, comprising:
a hardener composition as claimed in any one of claims 1-7; and
an epoxy resin.

15. A method for producing a prepolymer hardener composition, the method comprising:
reacting components (a) and (b) with an epoxy;
wherein components (a) and (b) are defined as in claim 1.

## Patentansprüche

1. Härterzusammensetzung für Epoxydharze, wobei die Härterzusammensetzung umfasst:
(a) 1,3-Bis(aminomethyl)cyclohexan und
(b) 1,4-Bis(aminomethyl)cyclohexan.

2. Härterzusammensetzung nach Anspruch 1, wobei die Härterzusammensetzung cis- und trans-Isomere von mindestens einer der Komponente (a) und Komponente (b) umfasst.

3. Härterzusammensetzung nach einem der Ansprüche 1 oder 2, wobei die Härterzusammensetzung cis- und trans-Isomere von sowohl Komponente (a) als auch Komponente (b) umfasst.

4. Härterzusammensetzung nach einem der Ansprüche 1-3, wobei die Härterzusammensetzung mindestens 5 Gewichtsprozent Komponente (b) bezogen auf ein Gesamtgewicht von Komponente (a) und Komponente (b) umfasst.

5. Härterzusammensetzung nach Anspruch 2, wobei die Härterzusammensetzung umfasst:
1 bis 97 Gewichtsprozent cis-1,3-Bis(aminomethyl)cyclohexan;
1 bis 97 Gewichtsprozent trans-1,3-Bis(aminomethyl)cyclohexan;
1 bis 97 Gewichtsprozent cis-1,4-Bis(aminomethyl)cyclohexan und
1 bis 97 Gewichtsprozent trans-1,4-Bis(aminomethyl)cyclohexan;
wobei die oben genannten Prozentangaben auf ein Gesamtgewicht von cis-1,3-Bis(aminomethyl)cyclohexan, trans-1,3-Bis(aminomethyl)-cyclohexan, cis-1,4-Bis(aminomethyl)cyclohexan und trans-1,4-Bis(aminomethyl)cyclohexan bezogen sind.

6. Härterzusammensetzung nach Anspruch 1, wobei der Härter 50-100 Gewichtsprozent einer Mischung von (a) und (b), 0-30 Gewichtsprozent bicyclisches Amin, 0-25 Gewichtsprozent bicyclisches Diamin und 0-15 Gewichtsprozent bicyclisches Imin umfasst.

7. Härterzusammensetzung nach einem der Ansprüche 1-5, wobei der Härter 50-100 Gewichtsprozent einer Mischung von (a) und (b) umfasst, und mindestens eine der folgenden drei bicyclischen Verbindungen: (i) mehr als 0 bis etwa 30 Gewichtsprozent bicyclisches Amin, (ii) mehr als 0 bis etwa 25 Gewichtsprozent bicyclisches Diamin und (iii) mehr als 0 bis etwa 15 Gewichtsprozent bicyclisches Imin.

8. Präpolymer-Härterzusammensetzung für Epoxydharze, wobei die Präpolymer-Härterzusammensetzung das Reaktionsprodukt eines Epoxyds mit der Härterzusammensetzung nach einem der Ansprüche 1-7 umfasst.

9. Härtbare Formulierung, umfassend:
eine Härterzusammensetzung nach einem der Ansprüche 1-7; und
ein Epoxydharz.

10. Härtbare Formulierung, umfassend:
eine Präpolymer-Härterzusammensetzung nach Anspruch 8; und
ein Epoxydharz.

11. Verfahren zum Verbinden zweier Substrate, umfassend:
Auftragen eines Epoxydharzes und der Härterzusammensetzung nach einem der Ansprüche 1-7 auf ein oder beide Substrat(e); und
Zusammenbringen der Substrate in eine Kontaktbeziehung.

12. Verfahren nach Anspruch 11, ferner umfassend Aushärten des Epoxydharzes bei einer Temperatur im Bereich von etwa -20 °C bis etwa 100 °C über eine Zeitdauer von weniger als 24 Stunden, um das Epoxydharz auszuhärten.

13. Verfahren zur Beschichtung eines Substrats, umfassend:
Aufbringen einer Beschichtungszusammensetzung auf ein Substrat;
wobei die Beschichtungszusammensetzung ein Epoxydharz und mindestens eine der Härterzusammensetzung nach einem der Ansprüche 1-7 und der Präpolymer-Härterzusammensetzung nach Anspruch 8 enthält.

14. Wässriges Epoxydharz oder wässrige Epoxydharzdispersion, umfassend:
eine Härterzusammensetzung nach einem der Ansprüche 1-7 und
ein Epoxydharz.

15. Verfahren zur Herstellung einer Präpolymer-Härterzusammensetzung, wobei das Verfahren umfasst:
Umsetzen der Komponenten (a) und (b) mit einem Epoxyd;
wobei die Komponenten (a) und (b) wie in Anspruch 1 definiert sind.

## Revendications

1. Composition d'agent de durcissement pour résines époxy, la composition d'agent de durcissement comprenant :
(a) le 1,3-bis(aminométhyl)cyclohexane ; et
(b) le 1,4-bis(aminométhyl)cyclohexane.

2. Composition d'agent de durcissement de la revendication 1, dans laquelle la composition d'agent de durcissement comprend des isomères cis et trans d'au moins l'un du composant (a) et du composant (b).

3. Composition d'agent de durcissement de l'une des revendications 1 et 2, dans laquelle la composition d'agent de durcissement comprend des isomères cis et trans des deux composants (a) et (b).

4. Composition d'agent de durcissement de l'une quelconque des revendications 1-3, dans laquelle la composition d'agent de durcissement comprend au moins 5 pourcent en poids du composant (b) sur la base d'un poids total du composant (a) et du composant (b).

5. Composition d'agent de durcissement de la revendication 2, dans laquelle la composition d'agent de durcissement comprend :
1 à 97 pourcent en poids de l'isomère cis du 1,3 bis(aminométhyl)cyclohexane ;
1 à 97 pourcent en poids de l'isomère trans du 1,3 bis(aminométhyl)cyclohexane ;
1 à 97 pourcent en poids de l'isomère cis du 1,4-bis(aminométhyl)cyclohexane ;
et
1 à 97 pourcent en poids de l'isomère trans du 1,4-bis(aminométhyl)cyclohexane ;
où les pourcentages précités sont basés sur un poids total de l'isomère cis du 1,3-bis(aminométhyl)cyclohexane, de l'isomère trans du 1,3-bis(aminométhyl)cyclohexane, de l'isomère cis du 1,4-bis(aminométhyl)cyclohexane, et de l'isomère trans du 1,4-bis(aminométhyl)cyclohexane.

6. Composition d'agent de durcissement de la revendication 1, dans laquelle l'agent de durcissement comprend de 50 jusqu'à 100 pourcent en poids d'un mélange de (a) et (b), de 0 jusqu'à 30 pourcent en poids d'une amine bicyclique, de 0 jusqu'à 25 pourcent en poids d'une diamine bicyclique, et de 0 jusqu'à environ 15 pourcent en poids d'une imine bicyclique.

7. Composition d'agent de durcissement de l'une quelconque des revendications 1-5, dans laquelle l'agent de durcissement comprend de 50 à 100 pourcent en poids d'un mélange de (a) et de (b), et au moins l'un des trois composants bicycliques suivants : (i) plus que 0 jusqu'à environ 30 pourcent en poids d'une amine bicyclique, (ii) plus que 0 jusqu'à environ 25 pourcent en poids d'une diamine bicyclique, et (iii) plus que 0 jusqu'à environ 15 pourcent en poids d'une imine bicyclique.

8. Composition d'agent de durcissement pré-polymère pour résines époxy, la composition de l'agent de durcissement pré-polymère comprenant le produit de réaction d'une résine époxy avec la composition d'agent de durcissement de l'une quelconque des revendications 1-7.

9. Formulation durcissable, comprenant :
une composition d'agent de durcissement telle que revendiquée dans l'une quelconque des revendications 1-7 ; et
une résine époxy.

10. Formulation durcissable, comprenant :
une composition d'agent de durcissement pré-polymère telle que revendiquée dans la revendication 8 ; et
une résine époxy.

11. Procédé destiné à faire adhérer deux substrats, comprenant le fait :
d'appliquer une résine époxy et la composition d'agent de durcissement de l'une quelconque des revendications 1-7 à l'un des substrats ou aux deux substrats ; et
de mettre les substrats en contact.

12. Procédé de la revendication 11, comprenant en outre le durcissement de la résine époxy à une température se trouvant dans la plage d'environ -20°C jusqu'à environ 100°C pendant moins de 24 heures afin de durcir la résine époxy.

13. Procédé de revêtement d'un substrat, comprenant le fait :
d'appliquer une composition de revêtement à un substrat ;
où la composition de revêtement comporte une résine époxy et au moins l'une de la composition d'agent de durcissement de l'une quelconque des revendications 1-7 et de la composition d'agent de durcissement pré-polymère de la revendication 8.

14. Dispersion de résine époxy ou de résine époxy aqueuse, comprenant :
une composition d'agent de durcissement telle que revendiquée dans l'une quelconque des revendications 1-7 ; et
une résine époxy.

15. Procédé destiné à produire une composition d'agent de durcissement pré-polymère, le procédé comprenant le fait de :
faire réagir les composants (a) et (b) avec une résine époxy ;
où les composants (a) et (b) sont définis comme dans la revendication 1.
